# EUROPÄISCHE PATENTSCHRIFT

(11) **EP 0 660 102 B1**
(45) Veröffentlichungstag und Bekanntmachung des Hinweises auf die Patenterteilung: **02.12.1998**
(21) Anmeldenummer: 94114684.7
(22) Anmeldetag: 17.09.1994
(51) Int. Cl.: G01N 11/00

(54) **Verfahren und Einrichtung zur Bestimmung der Fliessgrenze einer Substanz**
Method and device for determining the yield point of a substance
Procédé et dispositif pour la détermination de la limite élastique d'une substance

(30) Priorität: 10.12.1993 DE 4342179
(43) Veröffentlichungstag der Anmeldung: 28.06.1995
(73) Patentinhaber: Stehr, Werner, D-72160 Horb (DE)
(72) Erfinder: Stehr, Werner, D-72160 Horb (DE)
(74) Vertreter: Späth, Dieter, Dipl.-Ing.

(56) Entgegenhaltungen:
- AT-A- 351 305
- US-A- 2 747 399
- US-A- 4 164 136
- US-A- 4 164 212

## Beschreibung

Die Erfindung betrifft ein Verfahren und eine Einrichtung zur Bestimmung der Fließgrenze einer Substanz, beispielsweise von einem Fett oder einer verdickten Flüssigkeit, gemäß der Gattungsbegriffe der Ansprüche 1 und 3.

Aus der US-A 4 164 212 ist eine Einrichtung zur Bestimmung der Fließgrenze einer Körperflüssigkeit bekannt, die dazu dient, den Menstruationszyklus zu bestimmen. Die bekannte Einrichtung weist einen kugelförmigen Meßkörper auf, der schwenkbar in einer komplementären Meßkammer einliegt und von dem ein Stab absteht. Der Meßkörper wird mit der Körperflüssigkeit benetzt, in die Meßkammer eingesetzt und der Stab durch Anlage an einem Anschlag der Meßkammer in einem fest vorgegebenen Winkel schräg nach oben stehend ausgerichtet. Abhängig von der Fließgrenze der Körperflüssigkeit verbleibt der Stab in seiner Stellung oder er wird durch seine Gewichtskraft nach unten verschwenkt. Mit der bekannten Einrichtung läßt sich lediglich feststellen, ob die Fließgrenze der Körperflüssigkeit einen fest vorgegebenen Wert überschreitet oder unterschreitet.

Aus der US-A 2 747 399 ist eine Einrichtung zur Bestimmung der Fließgrenze von Schmierfett bekannt, bei der ein plattenförmiger Meßkörper in einen das Schmierfett enthaltenden Behälter eingetaucht wird. Der Meßkörper ist an einer Seite eines Waagebalkens einer Balkenwaage angehängt. Auf der anderen Seite des Waagebalkens hängt eine Pfanne, auf die Meßgewichte auflegbar sind. Die Masse der aufgelegten Meßgewichte, die den Meßkörper aus dem Schmierfett herauszieht, ist ein Maß für die Fließgrenze des Schmierfetts.

Der Erfindung liegt die Aufgabe zugrunde, ein Verfahren zur Bestimmung der Fließgrenze anzugeben, bei dem die Fließgrenze einfach und mit hoher Genauigkeit bestimmt werden kann.

Die Lösung dieser Aufgabe erhält man durch die im Anspruch 1 angegebenen Merkmale. Ein in der Substanz, deren Fließgrenze bestimmt werden soll, eintauchender Meßkörper wird langsam aus einer vertikalen Ruheposition in zunehmend stärker geneigte Positionen gebracht, bis er eine Grenzposition erreicht hat, in der er aufgrund seines Eigengewichts sich noch weiter neigt. Die Grenzposition wird festgehalten und dient zur Bestimmung der Fließgrenze der Substanz.

Bei dem erfindungsgemäßen Verfahren wird die Tatsache ausgenutzt, daß beispielsweise ein Stab in einem Fett oder einer strukturierten Substanz auch mit einem Neigungswinkel beliebig lange ohne selbsttätig umzufallen stehen bleibt, solange die oben genannte Grenzposition noch nicht erreicht ist. Erst bei Erreichen der strukturspezifischen Grenzposition fällt der Stab aufgrund seines Eigengewichts um. Bei dem erfindungsgemäßen Meßverfahren kann als Meßkörper ein Rundstab oder ein anderer langgestreckter Gegenstand mit geeignetem Profil verwendet werden, der an seinem Fußpunkt möglichst reibungsfrei schwenkbar gelagert ist. Zu diesem Zweck kann der Stab an seinem Fußpunkt eine Schneide oder eine Spitze aufweisen, mit der er am Boden einer Meßkammer, die die Substanz aufnimmt, schwenkbar gelagert ist.

Der Meßkörper kann bis zur Grenzposition durch langsames, kontinuierliches Verschwenken oder durch ein schrittweises Verschwenken in kleinen Winkelschritten gebracht werden. Dabei kann im Bereich der Fließgrenze zur Verbesserung der Meßauflösung die Schwenkgeschwindigkeit reduziert werden bzw. die Winkelschritte in kleineren und in zeitlich größeren Abständen vorgenommen werden.

Der Neigungswinkel des Meßkörpers in der Grenzposition gegenüber der Vertikalen ermöglicht in Verbindung mit dem Gewicht des Meßkörpers und dessen Profil eine normierte Angabe für die Fließgrenze der Substanz. Dabei muß gegebenenfalls auch berücksichtigt werden, ob und wie weit der Meßkörper aus der Substanz mit seinem oberen Ende herausragt. Die rechnerische Berücksichtigung dieser Meßvorgaben zur Bestimmung einer normierten Fließgrenze ist nicht Gegenstand dieser Erfindung, da grundsätzlich auch die Möglichkeit bestünde, für alle Messungen stets einheitliche Meßkörper unter gleichen sonstigen Meßbedingungen zu verwenden, so daß alleine der Neigungswinkel in der Grenzposition ein mittelbares Maß für die Fließgrenze angeben würde.

Der Erfindung liegt weiterhin die Aufgabe zugrunde, eine Einrichtung zu schaffen, mit der die Fließgrenze einer Substanz mit einfachen Mitteln und möglichst großer Genauigkeit ermittelt werden kann.

Die Lösung dieser Aufgabe erhält man durch die im Anspruch 3 angegebenen Merkmale. Die Substanz befindet sich in einer Meßkammer, in die ein Meßkörper eintaucht, der langsam und/oder schrittweise von einem Schwenkmechanismus aus der vertikalen Lage in eine geneigte Lage verschwenkt wird. Sobald der Meßkörper sich vom Schwenkmechanismus selbsttätig abhebt ist die Grenzposition erreicht, die als Maß für die Fließgrenze der Substanz dient. Aus dem Neigungswinkel des Schwenkmechanismus oder des Meßkörpers in der Grenzposition kann unter Berücksichtigung weiterer Meßparameter die Fließgrenze der Substanz bestimmt werden. Der Meßaufbau ist sehr einfach und kann für unterschiedliche Substanzen in geeigneter Weise durch sehr einfache Maßnahmen angepaßt werden. So kann beispielsweise für eine Substanz mit sehr niedriger Fließgrenze ein besonders leichtgewichtiger Meßkörper verwendet werden, beispielsweise ein dünnwandiges Rohr.

Der Schwenkmechanismus wird vorzugsweise von einem Schrittmotor über ein Getriebe betätigt. Eine Steuerung kann die zeitliche Aufeinanderfolge der einzelnen Antriebsschritte so verändern, daß gerade im Bereich der Fließgrenze die Grenzposition sehr exakt ermittelt werden kann. Vorzugsweise wird das Abheben des Meßkörpers vom Schwenkmechanismus von einem optischen oder elektrischen Sensor festgestellt und der Steuerung mitgeteilt, damit diese die zugehörige Winkelposition automatisch festhalten kann. Der gesamte Meßvorgang kann dadurch selbsttätig ablaufen.

Die Meßkammer besitzt vorzugsweise einen V-förmigen Längsschnitt, damit eine möglichst geringe Menge der Substanz für den Meßvorgang ausreicht. Es können auch andere Meßkammerformen verwendet werden, die außerdem an Flüssigkeiten mit höherer oder niedriger Fließgrenze in der Form angepaßt sein können.

An einem als Stab ausgebildeten Meßkörper kann zusätzlich ein auswechselbares Gewicht angebracht sein, um das Gewicht des Meßkörpers auf einfache Weise variieren zu können.

Ein stabförmiger Meßkörper kann an seinem Fußpunkt eine Spitze oder eine Schneide aufweisen, die das Schwenklager für den Meßkörper bildet.

Die Erfindung wird nachfolgend anhand eines in der Zeichnung dargestellten Ausführungsbeispiels näher erläutert.

Es zeigen:
Figur 1 den Verlauf einer Fließkurve,
Figur 2 das Prinzip der Einrichtung zur Bestimmung der Fließgrenze,
Figur 3 den prinzipiellen Aufbau der Einrichtung zur Bestimmung der Fließgrenze und
Figur 4 den Längsschnitt der Einrichtung von Figur 3 im Bereich eines am Schwenkmechanismus angebrachten Sensors.

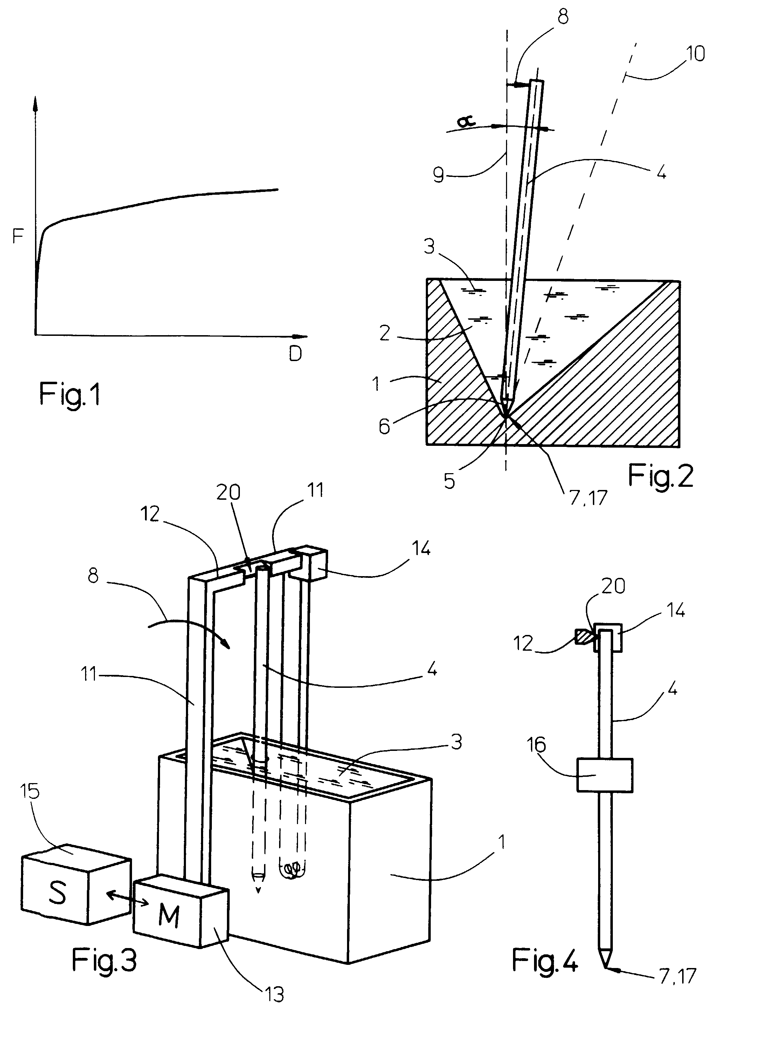

In Figur 1 ist als Fließkurve die Schubspannung τ in Abhängigkeit von dem Schergefälle D dargestellt. Die Fließgrenze F liegt dort, wo die Schubspannung gerade so groß ist, daß sich ein mit der Substanz, deren Fließgrenze bestimmt werden soll, in Berührung befindlicher Körper in Bewegung setzt.

Figur 2 zeigt die in Figur 3 dargestellte Meßkammer 1 im Längsschnitt, in deren V-förmigem Aufnahmeraum 2 sich eine Substanz 3 befindet. Ein als langgestreckter Rundstab ausgebildeter Meßkörper 4 taucht in die Substanz 3 bis zum Boden 5 der Meßkammer 1 ein. Der Meßkörper 4 hat an seinem Fußpunkt 6 eine Spitze 7, die ein praktisch reibungsfreies Verschwenken des Meßkörpers 4 in Pfeilrichtung 8 ermöglicht.

Der Meßkörper 4 ist gegenüber der Vertikalen 9 um einen Neigungswinkel α ausgelenkt, der jedoch noch so klein ist, daß der Meßkörper 4 in der dargestellten Position von der Substanz gehalten wird. Der Winkel α ist also so klein, daß der Meßkörper 4 noch nicht aufgrund seines Eigengewichts in Pfeilrichtung 8 umfällt.

Um nun die Fließgrenze der Substanz feststellen zu können, wird der Meßkörper 4 sehr langsam und gegebenenfalls in kleinen Winkelschritten in Pfeilrichtung 8 so lange bewegt, bis die Grenzposition erreicht ist, in der das Eigengewicht des Meßkörpers 4 ausreicht, um ihn selbsttätig in Pfeilrichtung 8 weiterzuverschwenken. Je nach Beschaffenheit der Substanz und entsprechend hoher oder niedriger Fließgrenze kann die Grenzposition 10 bei entsprechend unterschiedlichen Neigungswinkeln liegen. Unter Berücksichtigung des Profils, des Eigengewichts und der festgestellten Grenzposition 10 kann ein Wert für die Fließgrenze der Substanz angegeben werden. Dabei kann die Fließgrenze in der Maßeinheit N/m² (Newton pro Quadratmeter) oder auch in einer anderen Maßeinheit angegeben werden.

Figur 3 zeigt eine Einrichtung mit einer Meßkammer 1, bei der der Meßkörper 4 mittels eines Schwenkmechanismus 11 aus seiner Ruhelage mit zunehmendem Neigungswinkel verschwenkt wird. In der Meßkammer 1 befindet sich, wie bereits bei Figur 2 erwähnt, die Substanz 3, deren Fließgrenze bestimmt werden soll. An dem in die Substanz 4 eintauchenden Meßkörper liegt einseitig ein Quersteg 12 des Schwenkmechanismus an. Dieser Quersteg enthält einen keilförmigen Ausschnitt 20, in dem der Meßkörper anliegt und geführt wird. Der Quersteg 12 wird von einem Schrittmotor 13 in Pfeilrichtung 8 in kleinen Winkelschritten verschwenkt, bis der Meßkörper 4 sich selbsttätig von der Querstrebe 12 aufgrund seines Eigengewichts abhebt. Ein im Bereich des Quersteges 12 angeordneter Sensor 14 erkennt das Abheben des Meßkörpers 4 vom Quersteg 12 und meldet dies an eine Steuerung 15, damit diese den Neigungswinkel bei der erreichten Grenzposition festhalten kann. Die Steuerung 15 steuert den Schrittmotor 13 während des gesamten Meßverfahrens, so daß in der Steuerung 15 ständig der aktuelle Neigungswinkel des Meßkörpers 4 bekannt ist. Der aktuelle Neigungswinkel kann beispielsweise in einem Speicher festgehalten werden, so daß bei Erreichen der Grenzposition der aktuelle Speicherwert den zur Bestimmung der Fließgrenze heranzuziehenden Neigungswinkel aufweist.

In Figur 4 ist ein Meßkörper 4 mit einem an seinem Schaft auswechselbar angebrachten Gewicht 16 dargestellt.

Weiterhin sind der Querschnitt des Quersteges 12 und der Sensor 14 ersichtlich. Als Sensor können grundsätzlich unterschiedliche Sensorelemente zum Einsatz kommen, beispielsweise optische, induktive oder kapazitive Sensorelemente.

Die Spitze 7 des Meßkörpers 4 bildet im Zusammenhang mit dem Boden 5 (Figur 2) ein praktisch reibungsfreies Schwenklager 17. Anstelle der hier dargestellten Spitze 7 kann auch eine Schneide oder ein anderes geeignetes Lagerelement Verwendung finden.

## Patentansprüche

1. Verfahren zur Bestimmung der Fließgrenze einer Substanz, bei dem ein mit der Substanz in Berührung stehender und wenigstens in eine Richtung frei verschwenkbarer Meßkörper aus einer Ruhelage in Bewegung gesetzt wird und die Kraft, die gerade ausreichend ist, um den Körper aus der Ruhelage in Bewegung zu setzen die Fließgrenze definiert, **dadurch gekennzeichnet**, daß der Meßkörper (4) zunächst vertikal oder mit geringem Neigungswinkel in der Substanz (3) steht, daß der Meßkörper (4) aus der Ruhelage langsam in eine Richtung (8) verschwenkt wird, und daß der Neigungswinkel in der Grenzposition (10) in der der Meßkörper (4) sich aufgrund seines Eigengewichts selbsttätig weiter verschwenkt, festgehalten und zur Bestimmung der Fließgrenze (F) verwendet wird.

2. Verfahren nach Anspruch 1, **dadurch gekennzeichnet**, daß das Verschwenken des Meßkörpers (4) in kleinen aufeinanderfolgenden Winkelschritten erfolgt.

3. Einrichtung zur Bestimmung der Fließgrenze einer Substanz, mit einer Meßkammer (1) für die Aufnahme der Substanz (3), in die ein Meßkörper (4) eintaucht, der an seinem Fußpunkt (6) schwenkbar gelagert ist, und mit einem langsam und/oder schrittweise auslenkbaren Schwenkmechanismus (11), der an dem Meßkörper (4) angreift, **dadurch gekennzeichnet**, daß am Schwenkmechanismus (11) ein Sensor (14) angebracht ist, der das Abheben des Meßkörpers (4) vom Schwenkmechanismus (11) erkennt und veranlaßt, daß der dabei von dem Schwenkmechanismus (11) oder dem Meßkörper (4) eingenommene Neigungswinkel gegenüber der Vertikalen (9) als Grenzposition (10) festgehalten wird.

4. Einrichtung nach Anspruch 3, **dadurch gekennzeichnet**, daß der Schwenkmechanismus (11) einseitig am Meßkörper (4) anliegt und mittels einer Steuerung (15) mit einstellbarer Winkelgeschwindigkeit verschwenkbar ist.

5. Einrichtung nach einem der Ansprüche 3 oder 4, **dadurch gekennzeichnet**, daß der Schwenkmechanismus (11) von einem Schrittmotor (13) über ein Getriebe angetrieben wird.

6. Einrichtung nach einem der Ansprüche 3 bis 5, **dadurch gekennzeichnet**, daß die Meßkammer (1) einen im Längsschnitt V-förmigen Aufnahmeraum (2) für die Substanz (3) hat, in deren tiefstem Punkt der Meßkörper (4) am Boden (5) gelagert ist.

7. Einrichtung nach einem der Ansprüche 4 bis 6, **dadurch gekennzeichnet**, daß der Meßkörper (4) ein Stab mit einem an seinem Schaft befestigten Gewicht (16) ist.

8. Einrichtung nach einem der Ansprüche 3 bis 7, **dadurch gekennzeichnet**, daß der Meßkörper (4) an seinem Fußpunkt (6) als Schwenklager eine Spitze (7) oder eine Schneide aufweist.

## Claims

1. A method for determining the yielding point of a substance in which a measuring body which is in contact with the substance and is freely swivellable in at least one direction is put into motion from the idle position and the force which is just about sufficient to put the body into motion from the idle position defines the yielding point, characterized in that the measuring body (4) stands in the substance (3) at first vertically or with a small angle of inclination, the measuring body (4) is swivelled from the idle position slowly in one direction (8) and the angle of inclination in the threshold position (10) in which the measuring body (4) automatically swivels further owing to its own weight is fixed and is used for determining the yielding point (F).

2. A method as claimed in claim 1, characterized in that the swivelling of the measuring body (4) occurs in small successive angular steps.

3. A device for determining the yielding point of a substance, with a measuring chamber (1) for receiving the substance (3) into which immerses a measuring body (4) which is swivellably held at its foot point (6) and with a slowly and/or step-wise deflectable swivelling mechanism (11) which acts upon the measuring body (4), characterized in that a sensor (14) is attached to the swivelling mechanism (11) which recognizes the lifting of the measuring body (4) from the swivelling mechanism (11) and initiates that the angle of inclination as assumed by the swivelling mechanism (11) or the measuring body (4) towards the perpendicular (9) is fixed as threshold position (10).

4. A device as claimed in claim 3, characterized in that the swivelling mechanism (11) rests on the measuring body (4) on one side and is swivellable with an adjustable angular speed by means of a control unit (15).

5. A device as claimed in one of the claims 3 or 4, characterized in that the swivelling mechanism (11) is driven by a stepper motor (13) by way of a gear.

6. A device as claimed in one of the claims 3 to 5, characterized in that the measuring chamber (1) comprises a receiving chamber (2) for the substance which is V-shaped in its longitudinal section and at whose lowest point the measuring body (4) is held on the floor (5).

7. A device as claimed in one of the claims 4 to 6, characterized in that the measuring body (4) is a rod with a weight (16) fastened to its staff.

8. A device as claimed in one of the claims 3 to 7, characterized in that the measuring body (4) is provided at its foot point (6) with a tip (7) or a blade as pivot bearing.

## Revendications

1. Procédé permettant de déterminer la limite apparente d'élasticité d'une substance, selon lequel un corps de mesure étant en contact avec la substance et pouvant basculer librement dans au moins une direction est mis en mouvement à partir d'une position de repos et la force, laquelle suffit à mettre le corps en mouvement à partir de sa position de repos, définit la limite apparente d'élasticité, caractérisé en ce que dans un premier temps, le corps de mesure (4) se tient verticalement ou avec un faible angle d'inclinaison dans la substance (3), qu'il est ensuite basculé lentement dans un sens (8) à partir de sa position de repos et que l'angle d'inclinaison dans la position limite (10) où le corps de mesure (4) continue de basculer sous l'effet de son poids propre, est retenu et utilisé pour définir la limite apparente d'élasticité (F).

2. Procédé selon la revendication 1 caractérisé en ce que le basculement du corps de mesure (4) se déroule en petites étapes angulaires successives.

3. Dispositif permettant de déterminer la limite apparente d'élasticité d'une substance, avec une chambre de mesure (1) destinée à recevoir la substance (3) dans laquelle est plongé un corps de mesure (4) fixé pivotant à la hauteur de sa base (6), et avec un mécanisme de pivotement (11) pouvant être orienté lentement et/ou pas à pas, lequel agit sur le corps de mesure (4), caractérisé en ce que le mécanisme de pivotement (11) est pourvu d'un capteur (14) qui détecte le mouvement décrit par le corps de mesure (4) se décollant du mécanisme (11) et agit pour que soit retenu comme position limite (10) l'angle d'inclinaison que présentent le mécanisme de pivotement (11) ou le corps de mesure (4) par rapport à la verticale (9).

4. Dispositif selon la revendication 3 caractérisé en ce que le mécanisme de pivotement (11) porte unilatéralement sur le corps de mesure (4) et qu'une commande (15) lui permet de basculer à une vitesse angulaire réglable.

5. Dispositif selon l'une des revendications 3 ou 4 caractérisé en ce que le mécanisme de pivotement (11) est entraîné par un moteur pas à pas (3) par l'intermédiaire d'une chaîne cinématique.

6. Dispositif selon l'une des revendications 3 à 5 caractérisé en ce que la chambre de mesure (1) est pourvue d'un logement (2) destiné à recevoir la substance (3) et dont la section longitudinale est en forme de V, le corps de mesure (4) ayant été fixé au fond (5) en son point le plus profond.

7. Dispositif selon l'une des revendications 4 à 6 caractérisé en ce que le corps de mesure (4) est une barre sur la tige de laquelle on a fixé un poids (16).

8. Dispositif selon l'une des revendications 3 à 7 caractérisé en ce que le corps de mesure (4) présente à sa base (6) une pointe (7) ou une arête vive servant de palier pivotant.
